Europäisches Patentamt

European Patent Office

Office européen des brevets

(11) Veröffentlichungsnummer: **0 143 504**
A2

# EUROPÄISCHE PATENTANMELDUNG

(21) Anmeldenummer: **84201723.8**

(22) Anmeldetag: **28.11.84**

(51) Int. Cl.⁴: **H 04 N 5/10**

(30) Priorität: **01.12.83 DE 3343455**

(43) Veröffentlichungstag der Anmeldung: **05.06.85**
**Patentblatt 85/23**

(84) Benannte Vertragsstaaten: **DE FR GB IT**

(71) Anmelder: **Philips Patentverwaltung GmbH,**
**Billstrasse 80, D-2000 Hamburg 28 (DE)**

(84) Benannte Vertragsstaaten: **DE**

(71) Anmelder: **N.V. Philips' Gloeilampenfabrieken,**
**Groenewoudseweg 1, NL-5621 BA Eindhoven (NL)**

(84) Benannte Vertragsstaaten: **FR GB IT**

(72) Erfinder: **Johannes, Kurt, Osterstrasse 156,**
**D-2000 Hamburg 19 (DE)**

(74) Vertreter: **Hartmann, Heinrich, Dipl.-Ing. et al, Philips**
**Patentverwaltung GmbH**
**Billstrasse 80 Postfach 10 51 49,**
**D-2000 Hamburg 28 (DE)**

(54) Schaltungsanordnung zum Erkennen der Vertikalaustastlücke in einem Bildsignal.

(57) Die Erfindung bezieht sich auf eine Schaltungsanordnung zum Erkennen der Vertikalaustastlücke in einem Bildsignal, die einen Impulsabstandsdetektor und eine diesem nachgeschaltete Impulsformstufe enthält. Dem Impulsabstandsdetektor wird ein Impulse in bestimmter Reihenfolge umfassendes Synchronsignalgemisch zugeführt. Er gibt eine Ausgangssignaländerung ab, wenn die zeitlichen Abstände der Impulse eine bestimmte Zeitschwelle unterschreiten. Das Ausgangssignal wird der Impulsformstufe zugeführt, die daraufhin ein Vertikalsynchronsignal abgibt. Bei einer derartigen Schaltungsanordnung wird ein gegenüber dem Synchronsignalgemisch nahezu unverzögertes Vertikalsynchronsignal bei gleichzeitiger Verringerung des Schaltungsaufwandes dadurch erhalten, dass der Impulsabstandsdetektor die Zeitschwelle aus einem bestimmten Vielfachen einer Periode eines periodischen Taktsignals bildet und dass die Impulsformstufe das Vertikalsynchronsignal beim Auftreten bestimmter Impulse in der Reihenfolge der Impulse des Synchronsignalgemisches nach Auftreten der Änderung des Ausgangssignals formt.

Schaltungsanordnung zum Erkennen der Vertikalaustastlücke in einem Bildsignal

Die Erfindung bezieht sich auf eine Schaltungsanordnung zum Erkennen der Vertikal-Austastlücke in einem Bildsignal, mit einem Impulsabstandsdetektor, dem ein im Bildsignal enthaltenes, Impulse in bestimmter Reihenfolge umfassendes Synchronsignalgemisch zugeführt wird und der eine Änderung seines Ausgangssignals abgibt, wenn die zeitlichen Abstände aufeinander folgender Impulse eine bestimmte Zeitschwelle unterschreiten, und einer Impulsformstufe, der das Ausgangssignal zugeführt wird und die daraufhin ein Vertikal-Synchronsignal abgibt.

Ein Bildsignal, beispielsweise ein Fernsehsignal, enthält in der Regel mehrere Arten impulsförmiger Synchronsignale, die miteinander und mit den den Bildinhalt enthaltenden Signalen zum Bildsignal überlagert sind. Die Überlagerung aller Synchronsignale wird als Synchronsignalgemisch bezeichnet, das sich aus Zeilensynchronimpulsen, auch Horizontalimpulse genannt, sowie Bildwechselimpulsen, auch Vertikalimpulse genannt, zusammensetzt. Am Übergang zwischen zwei Zeilen des Bildsignals ist jeweils ein Horizontalimpuls eingefügt, während am Übergang zwischen zwei (Halb-)Bildern in der Regel mehrere Vertikalimpulse auftreten, deren genaue Anzahl von der Übertragungsnorm des Bildsignals abhängig ist. Zeitlich unmittelbar vor und nach den Vertikalimpulsen ist jeweils eine bestimmte Anzahl von Ausgleichsimpulsen angeordnet, die als Vortrabanten und Nachtrabanten bezeichnet werden und die bedeutend schmaler sind als die Horizontalimpulse und die Vertikalimpulse.

Aus der DE-PS 29 03 488 ist eine Schaltung zur Gewinnung eines Vertikalsynchronsignals aus einem Synchronsignalgemisch bekannt, die eine Impulsintervall-Prüfschaltung mit monostabilen Multivibratoren und einem D-Flipflop sowie eine Signalformerschaltung mit monostabilen Multivibratoren aufweist. Der Impulsintervall-Prüfschaltung ist eine Impulsbreiten-Prüfschaltung mit monostabilen Multivibratoren und einem D-Flipflop vorgeschaltet. Die Impulsbreiten-Prüfschaltung tastet alle ihr zugeleiteten Impulse des Synchronsignalgemisches ab und liefert ein Signal, wenn die Breite des abgetasteten Impulses drei Viertel des Sollwertes der Breite der Horizontalimpulse unterschreitet. Dieses Signal wird der Impulsintervall-Prüfschaltung zugeführt, die das Synchronsignalgemisch daraufhin untersucht, ob nach Ablauf einer halben Zeilendauer ein weiterer Impuls auftritt. Ist dies der Fall, wird das D-Flipflop der Impulsintervall-Prüfschaltung umgeschaltet, durch das wiederum die monostabilen Multivibratoren der Signalformerschaltung zur Abgabe von Impulsen angesteuert werden, die das von der Schaltung gewonnene Vertikalsynchronsignal bilden.

In der bekannten Schaltungsanordnung werden die zu überprüfenden Impulsbreiten und -abstände mit impulsförmigen Signalen verglichen, die ohne Ausnahme aus monostabilen Multivibratoren abgeleitet sind. Derartige Multivibratoren sind ihrer Funktion nach im Grunde analoge Schaltungen, die starke Temperaturabhängigkeiten aufweisen. Durch die in der bekannten Schaltungsanordnung vorgenommene Aneinanderreihung mehrerer durch monostabile Multivibratoren bestimmter Zeitintervalle können sich Fehler in den Multivibratoren in unzulässiger Weise addieren und Fehlfunktionen bewirken. Die Schaltungsanordnung muß daher sehr sorgfältig abgeglichen werden. Sie ist ferner aufgrund der für die monostabilen Multivibratoren stets benötigten, ihre Zeitkonstanten bestimmenden Kondensatoren nicht oder nur mit hohem Aufwand auf einem Halbleiterplättchen integrierbar. Die bekannte Schaltungsanordnung liefert darüber hinaus ein Vertikalsynchronsignal, das mit den Vertikalimpulsen aus dem Synchronsignalgemisch zeitlich nicht übereinstimmt.

Die Erfindung hat die Aufgabe, eine Schaltungsanordnung der eingangs genannten Art zu schaffen, die ein Vertikalsynchronsignal liefert, dessen zeitliche Lage wenigstens nahezu exakt mit der zeitlichen Lage der Vertikalimpulse zusammenfällt.

Die Aufgabe wird nach der Erfindung dadurch gelöst, daß der Impulsabstandsdetektor die Zeitschwelle aus einem bestimmten Vielfachen einer Periode eines periodischen Taktsignals bildet und daß die Impulsformstufe das Vertikalsynchronsignal beim Auftreten bestimmter Impulse in der Reihenfolge der Impulse des Synchronsignalgemisches nach Auftreten der Änderung des Ausgangssignals formt.

Der Erfindung liegt die Erkenntnis zugrunde, daß Fehler bei der Erzeugung eines Vertikalsynchronsignals aus dem Synchronsignalgemisch vorzugsweise durch Vergleich des Synchronsignalgemisches mit einem von diesem unabhängig erzeugten Zeitnormal, beispielsweise den Längen von mit monostabilen Multivibratoren erzeugten Impulsen, entstehen. Andererseits weist das Synchronsignalgemisch einen fest vorgegebenen zeitlichen Verlauf auf, so daß das Vertikalsynchronsignal unmittelbar und damit ohne zeitliche Verzögerungen aus den Vertikalimpulsen selbst gewonnen werden kann. Das Synchronsignalgemisch bildet dabei unmittelbar selbst das Zeitnormal für die Erzeugung des Vertikalsynchronsignals.

Bei der erfindungsgemäßen Schaltungsanordnung wird nur noch ein unabhängig erzeugtes Zeitnormal für die Detektion der Impulsabstände verwendet, und zwar werden zur frühzeitigen Erkennung des Auftretens von Vertikalimpulsen die zeitlichen Abstände von im Synchronsignalgemisch aufeinander folgenden Impulsen mit einer Zeitschwelle verglichen, die aus einem frequenzstabilen Taktsignal abgeleitet wird. Derartige Taktsignale stehen in jeder Schaltungsanordnung zum Bearbeiten von Bildsignalen, in deren Rahmen die erfindungsgemäße Schaltungsanordnung eingesetzt wird, zur Verfügung. Die Ableitung eines Zeitnormals für die Detektion der Impulsabstände ist bei der erfindungsgemäßen Schaltungsanordnung somit einfach und genau. Nach einer derartigen Detektion eines geringen Impulsabstandes im Synchronsignalgemisch werden aus der Reihenfolge der darin enthaltenen Impulse bestimmte Impulse zur Erzeugung des Vertikalsynchronsignals ausgewählt, das Synchronsignalgemisch somit unmittelbar als Zeitnormal verwendet.

Das Auftreten eines gegenüber einer normalen Zeilendauer auf die Hälfte verringerten Abstandes zwischen zwei Impulsen des Synchronsignalgemisches zeigt z.B. bei einem Bildsignal nach der PAL- oder NTSC-Norm den Anfang der Reihe der Vortrabanten an. Die Erfindung macht sich nun in vorteilhafter Weise die genau festgelegte Abfolge von - z.B. bei der PAL- oder NTSC-Norm - Vortrabanten, Vertikalimpulsen und Nachtrabanten zunutze. Entsprechendes gilt für alle Impulse enthaltenden (Bild-)Signale, bei denen eine Reihe von Impulsen mit gegenüber den Abständen zwischen den übrigen Impulsen verringerten Abständen detektiert und ein (Vertikalsynchron-)Signal mit exakt bestimmter zeitlicher Lage gegenüber der Reihe von Impulsen erzeugt werden soll. Da ein bestimmter Impuls, beispielsweise der erste Vertikalimpuls, stets an der gleichen Stelle der vorgegebenen Impulsabfolge auftritt, genügt es, nach Erkennen des ersten Vortrabanten den Beginn des zu erzeugenden Vertikalsynchronsignals beispielsweise mit dem Anfang eines vorbestimmten Impulses der Impulsabfolge beginnen und mit dem Ende eines weiteren vorbestimmten Impulses der Impulsabfolge enden zu lassen, ohne nochmals abzufragen, um welche Art von Impuls aus dem Synchronsignalgemisch es sich handelt. Das zu erzeugende Vertikalsynchronsignal läßt sich so bis auf wenige Gatterlaufzeiten verzögerungsfrei gewinnen. Die Schaltungsanordnung ist daher für eine Echtzeitverarbeitung eines Bildsignals und des in ihm enthaltenen Synchronsignalgemisches einsetzbar, beispielsweise für eine digitale Verarbeitung des Bildsignals.

Nach einer Fortbildung der Erfindung enthält die Impulsformstufe eine (erste) Zählvorrichtung, die die Impulse im Synchronsignalgemisch zählt. Dadurch ist eine sehr einfache Möglichkeit gegeben, die einzelnen Impulse in einer vorgegebenen Abfolge zu identifizieren.

Nach einer weiteren Fortbildung der Erfindung wird die erste Zählvorrichtung entriegelt, wenn die Änderung im Ausgangssignal des Impulsabstandsdetektors auftritt. Wenn der Impulsabstandsdetektor keine Änderung seines Ausgangssignals liefert, wird die erste Zählvorrichtung gesperrt. Dadurch wird verhindert, daß die erste Zählvorrichtung während der Dauer des Halbbildes die dann eintreffenden Horizontalimpulse im Synchronsignalgemisch zählt und dadurch in einen unkontrollierten Zustand versetzt wird. Vorzugsweise kann die erste Zählvorrichtung beim Fehlen der Ausgangssignaländerung des Impulsabstandsdetektors in eine Anfangsstellung zurückgesetzt werden.

Nach einer weiteren Fortbildung der Erfindung gibt die erste Zählvorrichtung zwischen zwei Zählstellungen das Vertikalsynchronsignal ab. Das Vertikalsynchronsignal beginnt beim Erreichen einer ersten Zählstellung und endet beim Erreichen einer zweiten Zählstellung. Es wird so unmittelbar durch die Impulse im Synchronsignalgemisch erzeugt und weist gegenüber diesen eine minimale Verzögerung auf, die nur eine interne Signallaufzeit der (ersten) Zählvorrichtung beträgt.

Nach einer anderen Weiterbildung der Erfindung enthält der Impulsabstandsdetektor eine zweite Zählvorrichtung, die die Perioden des Taktsignals zählt und die eine Signaländerung abgibt, wenn eine bestimmte, der Zeitschwelle entsprechende Zählstellung überschritten wird. Mit einer Zählvorrichtung kann in einfacher und genauer Weise aus einem Taktsignal ein Zeitintervall abgeleitet werden, das einem bestimmten Vielfachen der Periodendauer des Taktsignals entspricht. Die zweite Zählvorrichtung wird dann besonders einfach, wenn die von ihr abzugebende Signaländerung das Überlaufsignal nach Erreichen der höchstmöglichen Zählstellung der zweiten Zählvorrichtung ist.

Die erfindungsgemäße Schaltungsanordnung enthält keine monostabilen Multivibratoren, ist einfach aufgebaut und damit leicht auf einem Halbleiterplättchen integrierbar. Sie läßt sich vollständig aus digitalen Schaltungsteilen bilden und daher vorteilhaft beispielsweise in den Aufbau digitaler Videosignal-Verarbeitungsschaltungen einbeziehen.

Nach einer weiteren Ausgestaltung der Erfindung wird die zweite Zählvorrichtung durch die Impulse des Synchronsignalgemisches in ihre Anfangsstellung überführt. Sie beginnt dann mit jedem Impuls des Synchronsignalgemisches von ihrer Anfangsstellung aus neu zu zählen. Dadurch wird in einfacher Weise mit dem Auftreten jedes Impulses im Synchronsignalgemisch eine neue Prüfung des Abstandes
zweier aufeinander folgender Impulse eingeleitet.

Nach einer weiteren Ausgestaltung der Erfindung bilden die
Perioden des Taktsignals, die von der zweiten Zählvorrichtung zwischen ihrer Anfangsstellung und der Zählstellung,
mit deren Überschreiten sie die Signaländerung abgibt,
gezählt werden, ein Zeitintervall, das wenigstens eine
halbe und höchstens eine ganze Zeilendauer des Bildsignals
beträgt. Wenn beispielsweise N die Anzahl der genannten
Perioden des Taktsignals, T dessen Periodendauer und Z die
Zeilendauer des Bildsignals, d.h. der zeitliche Abstand
zweier aufeinander folgender (Horizontal-)Impulse, ist,
dann gilt die folgende Formel (x ist das Multiplikationszeichen)

$$(1/2)xZ < NxT < Z.$$

Damit ist sichergestellt, daß während des Halbbildes, wenn
aufeinander folgende (Horizontal-)Impulse im Abstand einer
ganzen Zeilendauer aufeinander folgen, zwischen je zwei
(Horizontal-)Impulsen ein Signal von der zweiten Zählvorrichtung abgegeben wird. Wenn dagegen während der
Vortrabanten, Vertikalimpulse und Nachtrabanten der
Abstand der Impulse eine halbe Zeilendauer des Bildsignals
beträgt, gibt die zweite Zählvorrichtung kein Signal ab,
da sie zwischen je zwei Impulsen nicht die entsprechende
Zählstellung erreicht.

Nach einer weiteren Ausgestaltung der Erfindung umfaßt der
Impulsabstandsdetektor eine Schaltstufe, der die Signaländerung von der zweiten Zählvorrichtung zugeführt wird
und die daraus die Änderung des Ausgangssignals des
Impulsabstandsdetektors bildet. Diese Schaltstufe bildet
somit beim Ausbleiben der Signaländerung von der zweiten Zählvorrichtung die Ausgangssignaländerung des Impulsabstandsdetektors und beendet diese, wenn nach dem letzten Nachtrabanten die zweite Zählvorrichtung wieder ein Signal liefert.

Nach einer weiteren Ausgestaltung der Erfindung enthält die Schaltstufe eine (erste) Kippstufe, der an einem Signaleingang die Signaländerung von der zweiten Zählvorrichtung und an einem Schalteingang das Synchronsignalgemisch zugeführt wird und die an einem Ausgang ein wenigstens zwei Schaltzustände umfassendes Signal abgibt, das von einem ersten in einen zweiten Schaltzustand überführt wird, wenn zu Beginn eines Impulses des Synchronsignalgemisches eine Signaländerung der zweiten Zählvorrichtung aufgetreten ist. Diese (erste) Kippstufe ist vorteilhaft als bistabiler Multivibrator aufgebaut und bildet somit einen einfachen, vollständig integrierbaren digitalen Schaltungsteil. Aus dem Signal vom Ausgang der (ersten) Kippstufe wird die Änderung des Ausgangssignals des Impulsabstandsdetektors abgeleitet.

Nach einer anderen Fortbildung der Erfindung wird in einer Schaltungsanordnung der eingangs genannten Art für ein Bildsignal, das abwechselnd aufeinander folgende Halbbilder erster und zweiter Art mit voneinander abweichendem zeitlichem Verlauf des Synchronsignalgemisches umfaßt, dem Impulsabstandsdetektor zum Anpassen der zeitlichen Lage seines Ausgangssignals an das Synchronsignalgemisch ein die Halbbilder kennzeichnendes Umschaltsignal zugeführt. Beispielsweise bei nach dem PAL-System übertragenen Bildsignalen beträgt bei den Halbbildern erster Art der Abstand zwischen dem letzten Horizontalimpuls und dem ersten Vortrabanten eine ganze Zeilendauer des Bildsignals, bei den Halbbildern zweiter Art jedoch nur eine halbe Zeilendauer. Bei der Bearbeitung eines derartigen

0143504

Synchronsignalgemisches wird dann der Impulsabstandsdetektor bei den Halbbildern erster Art den Abstand
zwischen dem ersten und dem zweiten Vortrabanten erkennen,
bei den Halbbildern zweiter Art jedoch bereits den Abstand
zwischen dem letzten Horizontalimpuls und dem ersten Vortrabanten. Durch das Umschaltsignal wird dieser Unterschied derart korrigiert, daß die Impulsformstufe zum
Formen des Vertikalsynchronsignals in jedem Halbbild die
gleichen Impulse heranzieht.

Dazu wird beispielsweise nach einer weiteren Ausgestaltung
der Erfindung das Umschaltsignal der Schaltstufe zugeführt
und diese dadurch derart umgeschaltet, daß das Ausgangssignal des Impulsabstandsdetektors stets in gleicher zeitlicher Lage zu einem bestimmten Vortrabanten auftritt. Die
erste Zählvorrichtung wird dann stets in der richtigen
zeitlichen Lage bezüglich der Impulse des Synchronsignalgemisches fortgeschaltet.

Nach einer weiteren Ausgestaltung der Erfindung enthält
die Schaltstufe eine zweite Kippstufe, der an einem
Signaleingang das Signal vom Ausgang der ersten Kippstufe,
an einem Schalteingang das Synchronsignalgemisch und an
einem Setzeingang das Umschaltsignal zugeführt wird und
die an einem Ausgang ein wenigstens zwei Schaltzustände
umfassendes Signal abgibt, das dem Zustand des Signals am
Signaleingang zu Beginn des jeweils letzten Impulses des
Synchronsignalgemisches entspricht, sowie eine Gatterschaltung, in der die Signale von den Ausgängen der
Kippstufen mit einer UND-Verknüpfung zum Ausgangssignal
des Impulsabstandsdetektors verknüpft werden. Durch eine
derartige Ausbildung der erfindungsgemäßen Schaltungsanordnung wird auf einfache Weise erreicht, daß das
Ausgangssignal des Impulsabstandsdetektors stets in
gleicher zeitlicher Lage zu den Impulsen im
Synchronsignalgemisch auftritt.

Im folgenden wird anhand der Zeichnung ein Ausführungsbeispiel der Erfindung näher erläutert. Es zeigen

Fig. 1 ein Blockschaltbild für eine Schaltungsanordnung nach der Erfindung,

Fig. 2 Signalverläufe in der Schaltungsanordnung nach Fig. 1 während eines Halbbildes erster Art,

Fig. 3 Signalverläufe in der Schaltungsanordnung nach Fig. 1 während eines Halbbildes zweiter Art.

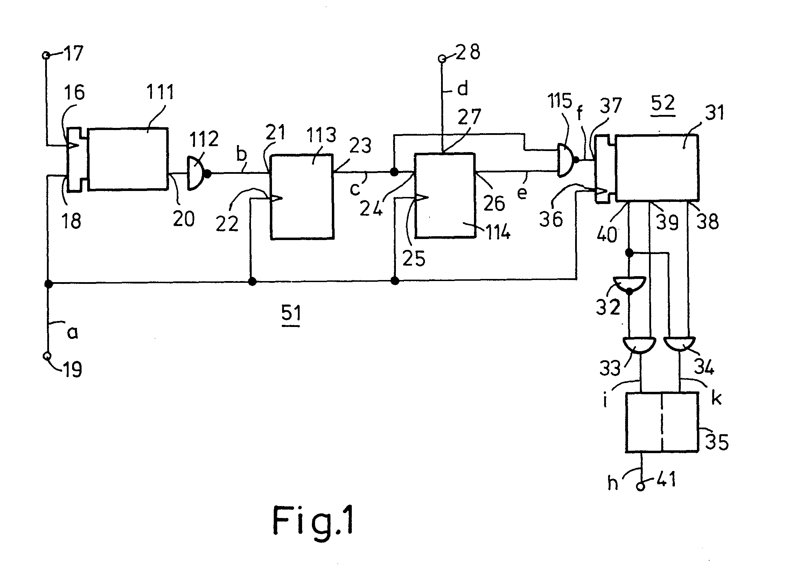

In Fig. 1 ist ein Beispiel für eine erfindungsgemäße Schaltungsanordnung dargestellt, die aus einem Impulsabstandsdetektor 51 und einer Impulsformstufe 52 besteht. Der Impulsabstandsdetektor 51 umfaßt einen zweiten Zähler 111, einen Inverter 112 sowie eine aus einer ersten und einer zweiten Kippstufe 113, 114 sowie einem NAND-Gatter 115 bestehenden Schaltstufe. Die Impulsformstufe 52 umfaßt einen ersten Zähler 31 sowie eine aus einem zweiten Inverter 32, zwei UND-Gattern 33, 34 und einer Kippschaltung 35 bestehende Dekodierstufe.

Der zweite Zähler 111 des Impulsabstandsdetektors 51 weist einen Zähleingang 16 auf, der mit einem Taktsignaleingang 17 verbunden ist, über den der Schaltungsanordnung ein periodisches Taktsignal zugeführt wird. Der zweite Zähler 111 weist weiterhin einen Rücksetzeingang 18 auf, der mit einem Eingang 19 der Schaltungsanordnung für das Synchronsignalgemisch verbunden ist. Der zweite Zähler 111 zählt die Schwingungsperioden des ihm am Zähleingang 16 zugeführten periodischen Taktsignals und wird in regelmäßigen Abständen durch die seinem Rücksetzeingang 18 zugeführten Impulse des Synchronsignalgemisches in ·eine

0143504

Anfangsstellung zurückgesetzt. Der zweite Zähler 111 weist weiterhin einen Überlaufausgang 20 auf, an dem ein Überlaufsignal auftritt, wenn beim Hochzählen des zweiten Zählers 111 eine bestimmte Zählerstellung überschritten wird.

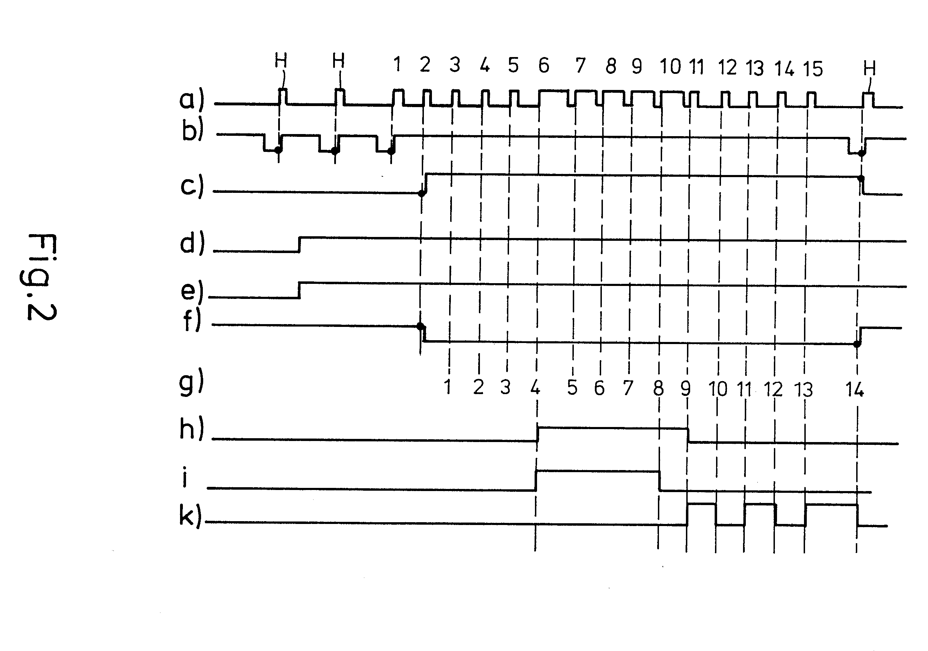

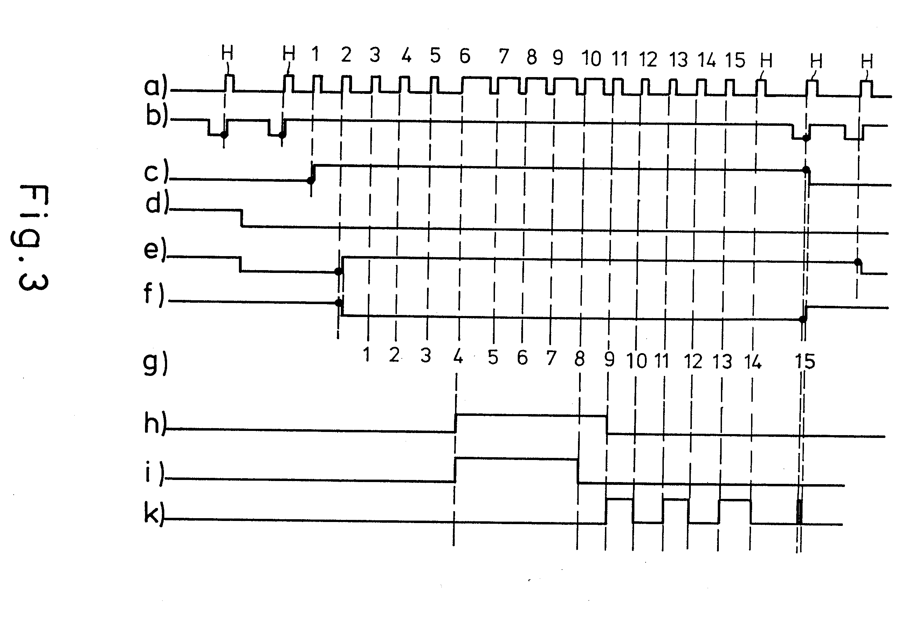

Zur Erläuterung der Funktionsweise der Schaltungsanordnung nach Fig. 1 sind einige darin auftretende Signalverläufe in den Fig. 2 und 3 dargestellt, die sich beispielsweise auf ein Bildsignal nach der PAL-Norn beziehen. Entsprechende Signalverläufe erhält man auch für Bildsignale nach anderen Normen (z.B. NTSC, SECAM). In Fig. 2 sind dabei die Signalverläufe während der Vertikalaustastlücke zu einem Halbbild erster Art dargestellt. Fig. 2a zeigt das in diesem Fall auftretende Synchronsignalgemisch. Auf die während des Halbbildes im Abstand einer Zeilendauer auftretenden Horizontalimpulse H, von denen in Fig. 2a die beiden letzten vor der Vertikalaustastlücke dargestellt sind, folgt im Abstand einer ganzen Zeilendauer der erste Vortrabant. Insgesamt treten in der Vertikalaustastlücke nacheinander fünf Vortrabanten, fünf Vertikalimpulse und fünf Nachtrabanten im Abstand von jeweils einer halben Zeilendauer auf. Diese Impulse sind in der Fig. 2a mit den Zahlen 1 bis 15 durchnumeriert. Das Synchronsignalgemisch gemäß Fig. 2a wird dem Eingang 19 in Fig. 1 zugeleitet.

Beispielsweise bei einem Bildsignal nach der PAL-Norm, bei dem eine Zeilendauer 64 µsec beträgt, wird als periodisches Taktsignal vorzugsweise der Farbhilfsträger mit einer Frequenz von etwa 4,43 MHz verwendet. Der zweite Zähler 111 wird dann achtstellig ausgeführt, so daß am Überlaufausgang 20 eine Signaländerung auftritt, wenn der Zähler 111 beginnend von seiner Anfangsstellung 256 Perioden des Taktsignals (Farbhilfsträger) gezählt hat. Diese Zeitschwelle NxT beträgt mit einer Anzahl N von 256 Perioden und einer Periodendauer T des Taktsignals von ungefähr 0,226 µsec etwa 57,8 µsec, liegt also zwischen dem Wert für eine halbe Zeilendauer mit 32 µsec und eine ganze Zeilendauer mit 64 µsec.

Fig. 2b zeigt das Signal am Überlaufausgang 20 des zweiten Zählers 111 in invertierter Form, d.h. am Ausgang des dem Überlaufausgang 20 nachgeschalteten Inverters 112. Die Signaländerung tritt in der zweiten Hälfte des Intervalls zwischen zwei Horizontalimpulsen, d.h. der Zeilendauer, auf und wird beendet, wenn der jeweils nachfolgende Impuls den zweiten Zähler 111 über den Rücksetzeingang 18 in seine Anfangsstellung zurücksetzt. Dieser Vorgang findet auch statt, wenn der zweite Zähler 111 durch den ersten Vortrabanten in seine Anfangsstellung zurückgesetzt wird. Der Zähler 111 beginnt dann wie nach jedem Impuls im Synchronsignalgemisch die Perioden des nicht dargestellten Taktsignals zu zählen. Da jetzt der nächste Impuls, der zweite Vortrabant, bereits nach einer halben Zeilendauer eintrifft, wird der zweite Zähler 111 bereits zurückgesetzt, bevor er an seinem Überlaufausgang 20 die Signaländerung liefern kann. Demzufolge bleibt, wie in Fig. 2b dargestellt, das Signal am Ausgang des Inverters 112 auf hohem Pegel, bis nach dem letzten Nachtrabanten (dem 15. Impuls in der Vertikalaustastlücke nach Fig. 2a) wieder ein Abstand von einer Zeilendauer zum nächsten Horizontalimpuls auftritt.

Die erste Kippstufe 113 im vorliegenden Ausführungsbeispiel wird durch ein D-Flipflop gebildet, das einen D-Eingang 21, einen Schalteingang 22 sowie einen Ausgang 23 aufweist. Die Funktion des D-Flipflops 113 besteht darin, daß das Signal am D-Eingang 21 jeweils zu dem Zeitpunkt, in dem das Signal am Schalteingang 22 eine ansteigende Flanke aufweist, gespeichert und am Ausgang 23 zur Verfügung gestellt wird. Der D-Eingang 21 des D-Flipflops 113 ist mit dem Ausgang des Inverters 112, der Schalteingang 22 mit dem Eingang 19 für das Synchronsignalgemisch verbunden. Wenn während eines Halbbildes im letzten Teil eines Intervalles zwischen zwei Horizontalimpulsen am Überlaufausgang 20 des zweiten Zählers 111 eine Signaländerung auftritt, befindet sich der Ausgang des Inverters 112 aufgrund der Signallaufzeit durch den zweiten Zähler 111 und den Inverter 112 noch auf niedrigem Potential, wenn am Schalteingang 22 bereits die ansteigende Flanke des nachfolgenden Impulses anliegt. Demzufolge verbleibt der Ausgang 23 des D-Flipflops 113 während des gesamten Halbbildes, d.h. solange am Überlaufausgang 20 ein Signal auftritt, auf niedrigem Potential.

Dieser Zustand ändert sich erst beim Eintreffen des zweiten Vortrabanten, da während dessen ansteigender Flanke am D-Eingang des D-Flipflops jetzt erstmalig ein hohes Potential anliegt. Am Ausgang 23 des D-Flipflops 113 tritt dann ebenfalls ein hohes Potential auf. Fig. 2c zeigt den Signalverlauf am Ausgang 23 der ersten Kippstufe 113. Zur Verdeutlichung der Wirkung der Signallaufzeiten sind in Fig. 2 die zeitlichen Abstände zwischen den ansteigenden Flanken der Signale unmaßstäblich groß eingezeichnet. Der Ausgang 23 der ersten Kippstufe 113 verbleibt auf hohem Potential, bis der erste Horizontalimpuls nach dem letzten Nachtrabanten im Abstand einer ganzen Zeilendauer auftritt, und wird dann wieder auf niedriges Potential zurückgeschaltet.

Das Signal vom Ausgang 23 der ersten Kippstufe 113 wird weiterhin einem D-Eingang 24 einer ebenfalls als D-Flipflop ausgebildeten zweiten Kippstufe 114 zugeleitet, deren Schalteingang 25 mit dem Eingang 19 für das Synchronsignalgemisch verbunden ist. Die zweite Kippstufe 114 speichert somit den Wert des Signals vom Ausgang 23 der ersten Kippstufe 113, der jeweils zum Zeitpunkt einer ansteigenden Flanke im Synchronsignalgemisch vorliegt, und gibt diesen an einem Ausgang 26 ab.

Darüber hinaus weist die zweite Kippstufe 114 einen Setzeingang 27 auf. Das diesem Setzeingang 27 zugeführte Signal hat für die Einstellung der zweiten Kippstufe 114 Vorrang vor den dem D-Eingang 24 und dem Schalteingang 25 zugeführten Signalen. Der Setzeingang 27 ist mit einem Eingang 28 der Schaltungsanordnung zum Zuführen eines die Halbbilder erster bzw. zweiter Art kennzeichnenden Umschaltsignals verbunden. Das Umschaltsignal weist während der zu den Halbbildern erster Art gehörenden Vertikalaustastlücke ein hohes und während der zu den Halbbildern zweiter Art gehörenden Vertikalaustastlücke ein niedriges Potential auf. Bei einem hohen Potential am Setzeingang 27 erscheint grundsätzlich am Ausgang 26 der zweiten Kippstufe 114 ebenfalls ein hohes Potential, während bei niedrigem Potential am Setzeingang 27 das Potential am Ausgang 26 durch die Signalfolgen an den Eingängen 24, 25 bestimmt wird.

In Fig. 2d ist das Umschaltsignal für ein Halbbild erster Art und in Fig. 2e das Signal am Ausgang 26 der zweiten Kippstufe 114 für diesen Fall wiedergegeben.

Das Signal vom Ausgang 26 der zweiten Kippstufe 114 wird einem ersten Eingang eines NAND-Gatters 115 zugeführt, dessen zweitem Eingang das Signal vom Ausgang 23 der ersten Kippstufe zugeleitet wird. Das Signal am Ausgang des NAND-Gatters 115 bildet das Ausgangssignal des Impulsabstandsdetektors 51. Es ist in Fig. 2f für ein Halbbild erster Art wiedergegeben und bildet einen negativen Impuls, dessen Vorderflanke durch die Vorderflanke des zweiten Vortrabanten und dessen Rückflanke durch die Vorderflanke des Horizontalimpulses ausgelöst wird, der dem letzten Nachtrabanten folgt.

Fig. 3 zeigt die Signalverläufe beim Auftreten eines Halbbildes zweiter Art, wieder am Beispiel eines Bildsignals nach der PAL-Norm. Hierbei folgt der erste Vortrabant in der Vertikalaustastlücke dem letzten Horizontalimpuls bereits nach einer halben Zeilendauer. Dies ist in Fig. 3a dargestellt. Vortrabanten, Vertikalimpulse und Nachtrabanten sind wie in Fig. 2a wieder mit den Zahlen 1 bis 15 durchnumeriert. Die Horizontalimpulse sind mit H gekennzeichnet.

Im Gegensatz zu dem in Fig. 2 dargestellten Fall bleibt die Signaländerung am Überlaufausgang 20 des zweiten Zählers 111 bereits vor dem ersten Vortrabanten aus, so daß bereits mit dem ersten Vortrabanten am Ausgang 23 der ersten Kippstufe 113 ein Übergang zu hohem Potential auftritt. Entsprechend weist erst das Intervall zwischen dem ersten und dem zweiten Horizontalimpuls nach der Vertikalaustastlücke wieder eine Länge von einer ganzen Zeilendauer auf, so daß erst vor dem zweiten Horizontalimpuls nach der Vertikalaustastlücke am Überlaufausgang 20 des zweiten Zählers 111 wieder eine Signaländerung auftritt. Demgemäß wird die erste Kippstufe 13 durch die Vorderflanke des zweiten Horizontalimpulses nach der Vertikalaustastlücke zurückgesetzt. Dies ist in den Fig. 3b und 3c wiedergegeben.

Fig. 3d zeigt den Verlauf des Umschaltsignals am Anschluß 28 während der Austastlücke zu einem Halbbild zweiter Art. Das Umschaltsignal wechselt zwischen dem vorletzten und dem letzten Horizontalimpuls vor der Vertikalaustastlücke von einem hohen auf ein niedriges Potential und
verbleibt dort während der gesamten Austastlücke.

Dadurch wird die zweite Kippstufe 114 freigegeben. Das
Signal am Ausgang 26 der zweiten Kippstufe 114 fällt
zunächst mit dem Umschaltsignal auf niedriges Potential,
wie in Fig. 3e dargestellt. Während der Vorderflanken des
letzten Horizontalimpulses und des ersten Vortrabanten
weist der Ausgang 23 der ersten Kippstufe 113 noch ein
niedriges Potential auf, so daß auch das Potential am
Ausgang 26 der zweiten Kippstufe 114 noch auf einem
niedrigen Wert verbleibt. Erst mit der Vorderflanke des
zweiten Vortrabanten, während der das Signal am Ausgang 23
nun hohes Potential aufweist, wird auch das Potential am
Ausgang 26 der zweiten Kippstufe 114 auf hohes Potential
umgeschaltet. Der Ausgang 26 verbleibt auf hohem Potential, solange während der folgenden ansteigenden Flanken
im Synchronsignalgemisch nach Fig. 3a das Potential des
Signals am Ausgang 23 gemäß Fig. 3c hoch ist. Erst zum
Zeitpunkt der Vorderflanke des dritten Horizontalimpulses
nach der Vertikalaustastlücke befindet sich das Potential
am Ausgang 23 wieder auf einem niedrigen Wert, so daß erst
mit dieser Vorderflanke das Potential am Ausgang 26 auf
einen niedrigen Wert zurückgeschaltet wird.

Am Ausgang des NAND-Gatters 115 erscheint dann das in
Fig. 3f dargestellte Ausgangssignal des Impulsabstandsdetektors für ein Halbbild zweiter Art. Es hat die Form
eines negativen Impulses, dessen Vorderflanke durch die
Vorderflanke des zweiten Vortrabanten und dessen Rückflanke durch die Vorderflanke des zweiten Horizontalimpulses nach der Vertikalaustastlücke ausgelöst wird. Die
Vorderflanke des Ausgangssignals des Impulsabstandsdetektors 51 liegt somit bei beiden Arten von Halbbildern bzw.
Verläufen des Synchronsignalgemisches stets bei der
Vorderflanke des zweiten Vortrabanten.

0143504

Die Impulsformstufe 52 enthält einen ersten Zähler 31, dessen Zähleingang 36 mit dem Eingang 19 für das Synchronsignalgemisch und dessen Rücksetzeingang 37 mit dem Ausgang des NAND-Gatters 115 verbunden ist. Der erste Zähler 31 wird demgemäß während der Dauer jedes Halbbildes in seinen Anfangszustand gesetzt und dort verriegelt. Erst mit der Vorderflanke des zweiten Vortrabanten, d.h. mit Auftreten der Änderung des Ausgangssignals des Impulsabstandsdetektors 51, wird der Zähler 31 entriegelt und zählt die im folgenden am Eingang 19 eintreffenden Impulse des Synchronsignalgemisches jeweils mit deren Vorderflanken. Die Zählerstellungen des ersten Zählers 31 sind für die beiden beschriebenen Arten von Halbbildern in den Fig. 2g bzw. 3g symbolisch dargestellt. Der erste Zähler 31 ist vorzugs-weise als Binärzähler ausgebildet, der an seinen Ausgängen Signale abgibt, die mehrstellige Dualzahlen darstellen. Im vorliegenden Beispiel weist der erste Zähler 31 vier Stellen auf.

Von den Ausgängen des ersten Zählers 31 sind die die erste Stelle mit der höchsten Wertigkeit und die vierte Stelle mit der niedrigsten Wertigkeit führenden Ausgänge 38 und 40 mit je einem Eingang eines UND-Gatters 34 verbunden, während der die dritte Stelle mit der zweithöchsten Wertigkeit führende Ausgang 39 mit einem Eingang eines anderen UND-Gatters 33 und der die vierte Stelle führende Ausgang 40 über einen zweiten Inverter 32 mit einem weiteren Eingang des anderen UND-Gatters 33 verbunden ist. Die Ausgänge der UND-Gatter 33, 34 sind jeweils mit einem Eingang einer Kippschaltung 35 verbunden.

Beim Zählen der Impulse des Synchronsignalgemisches in der Vertikalaustastlücke gemäß den in den Fig. 2g und 3g symbolisch wiedergegebenen Zahlenfolgen werden aus den von den Ausgängen des Zählers 31 abgegebenen Signalen am Ausgang des UND-Gatters 34 die in den Fig. 2k bzw. 3k dargestellten Signale gebildet, während am Ausgang des anderen UND-Gatters 33 Signale gemäß den Fig. 2i und 3i auftreten. Diese Signale treten in der Form positiver Impulse während der Vertikalaustastlücke auf. Durch positive Vorderflanken am Ausgang des UND-Gatters 33 wird die Kippschaltung 35 in einen Zustand geschaltet, in dem sie an ihrem Ausgang 41 ein hohes Potential abgibt, während sie durch ansteigende Flanken in den Signalen vom Ausgang des UND-Gatters 34 in einen Zustand geschaltet wird, in dem sie an ihrem Ausgang 41 ein niedriges Potential abgibt. Dadurch entsteht am Ausgang 41 ein Signal, dessen Verlauf in den Fig. 2h bzw. 3h dargestellt ist. Dieses Signal bildet einen positiven Impuls, dessen Vorderflanke nur um die Signallaufzeit vom Zähleingang 36 des ersten Zählers 31 zum Ausgang 41 der Kippschaltung 35, d.h. um wenige Nanosekunden, gegenüber der Vorderflanke des ersten Vertikalimpulses im Synchronsignalgemisch verzögert ist, und dessen Rückflanke in entsprechender zeitlicher Zuordnung zur Vorderflanke des ersten Nachtrabanten liegt.

Das vorstehend beschriebene Ausführungsbeispiel bezieht sich auf eine Schaltungsanordnung zur Verarbeitung eines Synchronsignalgemisches aus einem Bildsignal nach der PAL-Norm. Bei Bildsignalen nach anderen Normen, beispielsweise der NTSC-Norm, treten ähnliche Synchronsignalgemische auf, bei denen die Anzahl der Trabanten und der Vertikalimpulse von dem beschriebenen Beispiel abweichen kann. Die erfindungsgemäße Schaltungsanordnung kann jedoch ohne weiteres auf andere Impulsfolgen angepaßt werden, indem beispielsweise von den Ausgängen des ersten Zählers 31 der veränderten Impulsfolge entsprechend andere Zählerstellungen ausgewählt werden und indem die Periodendauer des Taktsignals, die Zählerstellung des zweiten Zählers 111, in der an seinem Ausgang 20 ein Überlaufsignal

0143504
PHD 83-113 EP

auftritt, und die Zeilendauer entsprechend der allgemeinen Bedingung aufeinander angepaßt werden. Auch die Impulsbreiten im Synchronsignalgemisch lassen sich ohne Beeinträchtigung der Funktionsweise der erfindungsgemäßen Schaltungsanordnung verändern. Einzige Bedingung für die der Schaltungsanordnung zugeführte Impulsreihe ist, daß vor dem zu detektierenden Zeitpunkt die Abstände aufeinander folgender Impulse eine bestimmte Zeitschwelle unterschreiten.

0143504

PHD 83-113 EP

PATENTANSPRÜCHE

1.    Schaltungsanordnung zum Erkennen der Vertikalaustastlücke in einem Bildsignal, mit einem Impulsabstandsdetektor, dem ein im Bildsignal enthaltenes, Impulse in
bestimmter Reihenfolge umfassendes Synchronsignalgemisch
zugeführt wird und der eine Änderung seines Ausgangssignals abgibt, wenn die zeitlichen Abstände aufeinander
folgender Impulse eine bestimme Zeitschwelle unterschreiten, und einer Impulsformstufe, der das Ausgangssignal zugeführt wird und die daraufhin ein Vertikalsynchronsignal abgibt,
dadurch gekennzeichnet, daß der Impulsabstandsdetektor
(51) die Zeitschwelle aus einem bestimmten Vielfachen
einer Periode eines periodischen Taktsignals bildet und
daß die Impulsformstufe (52) das Vertikalsynchronsignal
beim Auftreten bestimmter Impulse in der Reihenfolge der
Impulse des Synchronsignalgemisches nach Auftreten der
Änderung des Ausgangssignals formt.

2.    Schaltungsanordnung nach Anspruch 1,
dadurch gekennzeichnet, daß die Impulsformstufe (52) eine
(erste) Zählvorrichtung (31) enthält, die die Impulse im
Synchronsignalgemisch zählt.

3.    Schaltungsanordnung nach Anspruch 2,
dadurch gekennzeichnet, daß die (erste) Zählvorrichtung
(31) entriegelt wird, wenn die Änderung im Ausgangssignal
des Impulsabstandsdetektors (51) auftritt.

4.     Schaltungsanordnung nach Anspruch 2 oder 3,
dadurch gekennzeichnet, daß die (erste) Zählvorrichtung
(31) zwischen zwei Zählstellungen das Vertikalsynchronsignal abgibt.

5.     Schaltungsanordnung nach einem oder mehreren der
vorhergehenden Ansprüche,
dadurch gekennzeichnet, daß der Impulsabstandsdetektor
(51) eine zweite Zählvorrichtung (111) enthält, die die
Perioden des Taktsignals zählt und die eine Signaländerung
abgibt, wenn eine bestimmte, der Zeitschwelle entsprechende Zählstellung überschritten wird.

6.     Schaltungsanordnung nach Anspruch 5,
dadurch gekennzeichnet, daß die zweite Zählvorrichtung
(111) durch die Impulse des Synchronsignalgemisches in
ihre Anfangsstellung überführt wird.

7.     Schaltungsanordnung nach Anspruch 6,
dadurch gekennzeichnet, daß die Perioden des Taktsignals,
die von der zweiten Zählvorrichtung (111) zwischen ihrer
Anfangsstellung und der Zählstellung, mit deren Überschreiten sie die Signaländerung abgibt, gezählt werden,
ein Zeitintervall bilden, das wenigstens eine halbe und
höchstens eine ganze Zeilendauer des Bildsignals beträgt.

8.     Schaltungsanordnung nach Anspruch 5, 6 oder 7,
dadurch gekennzeichnet, daß der Impulsabstandsdetektor
(51) eine Schaltstufe (113, 114, 115) umfaßt, der die
Signaländerung von der zweiten Zählvorrichtung (111) zugeführt wird und die daraus die Änderung des Ausgangssignals
des Impulsabstandsdetektors (51) bildet.

9.	Schaltungsanordnung nach Anspruch 8,
dadurch gekennzeichnet, daß die Schaltstufe (113, 114, 115) eine (erste) Kippstufe (113) enthält, der an einem Signaleingang (21) die Signaländerung von der zweiten Zählvorrichtung (111) und an einem Schalteingang (22) das Synchronsignalgemisch zugeführt wird und die an einem Ausgang (23) ein wenigstens zwei Schaltzustände umfassendes Signal abgibt, das von einem ersten in einen zweiten Schaltzustand überführt wird, wenn zu Beginn eines Impulses des Synchronsignalgemisches eine Signaländerung der zweiten Zählvorrichtung aufgetreten ist.

10.	Schaltungsanordnung nach einem oder mehreren der vorhergehenden Ansprüche für ein Bildsignal, das abwechselnd aufeinander folgende Halbbilder erster und zweiter Art mit voneinander abweichendem zeitlichem Verlauf des Synchronsignalgemisches umfaßt,
dadurch gekennzeichnet, daß dem Impulsabstandsdetektor (51) zum Anpassen der zeitlichen Lage seines Ausgangssignals an das Synchronsignalgemisch ein die Halbbilder kennzeichnendes Umschaltsignal zugeführt wird.

11.	Schaltungsanordnung nach Anspruch 8 und 10 oder 9 und 10,
dadurch gekennzeichnet, daß das Umschaltsignal der Schaltstufe (113, 114, 115) zugeführt wird.

12.	Schaltungsanordnung nach Anspruch 11,
dadurch gekennzeichnet, daß die Schaltstufe (113, 114, 115) eine zweite Kippstufe (114) enthält, der an einem Signaleingang (24) das Signal vom Ausgang (23) der ersten Kippstufe (113), an einem Schalteingang (25) das Synchronsignalgemisch und an einem Setzeingang (27) das Umschaltsignal zugeführt wird und die an einem Ausgang (26) ein wenigstens zwei Schaltzustände umfassendes Signal abgibt, das dem Zustand des Signals am Signaleingang (24) zu Beginn des jeweils letzten Impulses des Synchronsignalgemisches entspricht, sowie eine Gatterschaltung (115), in der die Signale von den Ausgängen (23, 26) der Kippstufen (113, 114) mit einer UND-Verknüpfung zum Ausgangssignal des Impulsabstandsdetektors (51) verknüpft werden.

Fig.1

0143504

Fig.2

2 − III − PHD 83 − 113

0143504

Fig.3